# EUROPÄISCHE PATENTSCHRIFT

(11) **EP 2 582 555 B1**
(45) Veröffentlichungstag und Bekanntmachung des Hinweises auf die Patenterteilung: **25.02.2015**
(21) Anmeldenummer: 11715527.5
(22) Anmeldetag: 19.04.2011
(51) Int. Cl.: B60S 1/38, B60S 1/40

(54) **SCHEIBENWISCHERVERBINDUNGSEINHEIT**
WIPER CONNECTING UNIT
UNITÉ DE RACCORDEMENT D'UN ESSUIE-GLACE

(30) Priorität: 16.06.2010 DE 102010030142
(43) Veröffentlichungstag der Anmeldung: 24.04.2013
(73) Patentinhaber: Robert Bosch GmbH, 70442 Stuttgart (DE)
(72) Erfinder: TUYLS, Guido, B-3380 Bunsbeek (BE); VERTONGEN, Robert, B-3550 Heusden-Zolder (BE); BRATEC, Hervé, B-3012 Wilsele (BE)
(86) Internationale Anmeldenummer: PCT/EP2011/056186
(87) Internationale Veröffentlichungsnummer: WO 2011/157465

(56) Entgegenhaltungen:
- WO-A1-2007/033827
- WO-A1-2010/044768
- WO-A1-2010/094513
- DE-A1- 10 323 997
- DE-U1-202005 008 673
- US-A1- 2006 021 178

## Beschreibung

### Stand der Technik

Aus der DE 20 2005 008673 U1 ist bereits eine Scheibenwischerverbindungseinheit mit einem Grundkörper zur Verbindung eines Wischblattadapters, wobei der Wischblattadapter ein Bauteil eines Scheibenwischers bildet und dazu vorgesehen ist, Federschienen zur Vorspannung eines Wischgummis des Scheibenwischers mit dem Wischgummi zu verbinden, und mit einem Wischarm eines Scheibenwischers bekannt, wobei der Grundkörper einen auf einer Wischarmseite angeordneten Spoileraufnahmebereich aufweist, wobei ein Randbereich des Spoileraufnahmebereichs, in einer Ebene senkrecht zu einer Längsrichtung des Grundkörpers betrachtet, zumindest teilweise gekrümmt ausgebildet ist.

### Offenbarung der Erfindung

Die Erfindung geht aus von einer Scheibenwischerverbindungseinheit mit einem Grundkörper zur Verbindung eines Wischblattadapters, wobei der Wischblattadapter ein Bauteil eines Scheibenwischers bildet und dazu vorgesehen ist, Federschienen zur Vorspannung eines Wischgummis des Scheibenwischers mit dem Wischgummi zu verbinden, und mit einem Wischarm eines Scheibenwischers, wobei der Grundkörper einen auf einer Wischarmseite angeordneten Spoileraufnahmebereich aufweist, wobei ein Randbereich des Spoileraufnahmebereichs, in einer Ebene senkrecht zu einer Längsrichtung des Grundkörpers betrachtet, zumindest teilweise gekrümmt ausgebildet ist.

Es wird vorgeschlagen, dass der Grundkörper ein zumindest teilweise quer zu der Längsrichtung des Grundkörpers, an den Spoileraufnahmebereich angrenzendes erstes Fluidrückhalteelement aufweist, wobei das erste Fluidrückhalteelement ausgehend vom Spoileraufnahmebereich, von einer Deckseite des Grundkörpers betrachtet, bogenförmig ausgebildet ist. In diesem Zusammenhang soll unter "einem Grundkörper" ein Bauteil der Scheibenwischerverbindungseinheit verstanden werden, das zumindest einen Koppelbereich, insbesondere mit einem Formschlusselement, zur Ankopplung an den Wischarm aufweist und im Wesentlichen dazu vorgesehen ist, im Betrieb des Scheibenwischers Kräfte und/oder Momente zur Erzeugung einer Wischbewegung von dem Wischarm auf den Wischblattadapter zu übertragen. Unter einem "Wischblattadapter" soll hier insbesondere ein Bauteil des Scheibenwischers, insbesondere des Wischblatts, verstanden werden, das dazu vorgesehen ist, Federschienen zur Vorspannung eines Wischgummis des Scheibenwischers mit dem Wischgummi zu verbinden. Die Federschienen werden vorzugsweise mittels hakenförmiger Befestigungselemente des Wischblattadapters in nutförmigen Ausnehmungen im Wischgummi gehalten. Der Begriff "Wischarm" soll hier insbesondere ein Bauteil des Scheibenwischers definieren, das mittels einer gelenkfreien oder gelenkigen Verbindung mit einer an einer Antriebswelle befestigbaren Befestigungsnabe dazu vorgesehen ist, eine hin- und hergehende Wischbewegung des Wischblatts, insbesondere des Wischgummis, auf einer Scheibe, insbesondere einer Windschutzscheibe eines Kraftfahrzeugs, zu erzeugen. Der Wischarm umfasst hierbei zumindest eine Wischstange, an die das Wischblatt des Scheibenwischers mittels der Scheibenwischerverbindungseinheit koppelbar ist. Unter "einer Wischarmseite" soll hier insbesondere eine Seite des Grundkörpers verstanden werden, die nach einer Verbindung der Scheibenwischerverbindungseinheit mit dem Wischarm, in einer Längsrichtung des Grundkörpers betrachtet, dem Wischarm zugewandt ist. Eine Erstreckung der Wischarmseite des Grundkörpers wird durch zwei zumindest im Wesentlichen parallel zur Längsrichtung des Grundkörpers verlaufende, sich gegenüberliegende Seitenwände des Grundkörpers begrenzt. Unter "im Wesentlichen parallele Wände" soll hier insbesondere verstanden werden, dass ausgehend von einer durch eine der Wände vorgegebenen Längsausrichtung die andere Wand eine Längsausrichtung aufweist, die weniger als 5° und vorzugsweise weniger als 2° von der vorgegebenen Längsausrichtung abweicht. Entlang der Längsrichtung des Grundkörpers weist der Grundkörper, bezogen auf eine zumindest im Wesentlichen parallel zu den sich gegenüberliegenden Seitenwänden verlaufende Strecke, eine maximale Erstreckung auf.

Ein "Spoileraufnahmebereich" soll insbesondere ein Randbereich und ein durch den Randbereich begrenzter Raum des Grundkörpers definieren, die dazu vorgesehen sind, zumindest teilweise eine Spoilereinheit des Scheibenwischers, insbesondere des Wischblatts, aufzunehmen, so dass die Spoilereinheit, insbesondere ein dem Grundkörper zugewandter Bereich der Spoilereinheit, in einem montierten Zustand der Scheibenwischerverbindungseinheit zumindest teilweise von dem Grundkörper, insbesondere dem Randbereich, umgeben und in dem vom Randbereich begrenzten Raum angeordnet ist. Der Randbereich des Spoileraufnahmebereichs weist vorteilhaft eine zu einer Außenkontur der Spoilereinheit korrespondierende Form auf. Besonders bevorzugt ist der Randbereich des Spoileraufnahmebereichs, in einer Ebene senkrecht zur Längsrichtung des Grundkörpers betrachtet, zumindest teilweise gekrümmt und vorzugsweise zumindest im Wesentlichen S-förmig ausgebildet. Unter "im Wesentlichen S-förmig" soll hier insbesondere eine Form verstanden werden, die zumindest zwei in einer Ebene verlaufende, aufeinanderfolgende Bögen umfasst, die jeweils eine zueinander entgegengesetzte Orientierung aufweisen. Die Außenkontur der Spoilereinheit, insbesondere ein dem Spoileraufnahmebereich zugewandter Bereich der Außenkontur, greift vorzugsweise in einem montierten Zustand der Scheibenwischerverbindungseinheit in den durch den Randbereich des Spoileraufnahmebereichs begrenzten Raum, an den Randbereich zumindest im Wesentlichen formschlüssig anliegend, ein. Unter "im Wesentlichen formschlüssig" soll hier insbesondere eine Aufnahme der Spoilereinheit in dem durch den Randbereich begrenzten Raum des Spoileraufnahmebereichs verstanden werden, wobei zumindest ein dem Spoileraufnahmebereich zugewandter Bereich der Spoilereinheit den durch den Randbereich begrenzten Raum des Spoileraufnahmebereichs bis auf ein toleranzbedingtes Spiel und/oder mindestens zu 80% ausfüllt und/oder direkt an einer Innenseite des Randbereichs des Spoileraufnahmebereichs anliegt. In diesem Zusammenhang soll unter "vorgesehen" insbesondere speziell ausgestattet und/oder speziell ausgelegt verstanden werden. Mittels der erfindungsgemäßen Ausgestaltung der Scheibenwischerverbindungseinheit kann die Spoilereinheit konstruktiv einfach aufgenommen werden, so dass eine vorteilhafte Fluidanströmung der Spoilereinheit erreicht werden kann. Es kann zudem besonders vorteilhaft ein so genanntes "Wasserüberspritzen" bei einem Betrieb des Scheibenwischers verhindert werden.

Erfindungsgemäß weist der Grundkörper ein zumindest teilweise quer zu einer Längsrichtung des Grundkörpers, an den Spoileraufnahmebereich angrenzendes erstes Fluidrückhalteelement auf. Hierbei soll unter einem "Fluidrückhalteelement" ein Element verstanden werden, das mittels einer speziellen Form und/oder mittels einer speziellen Oberflächenstruktur und/oder mittels eines speziellen Zusammenwirkens mit einem weiteren Bauteil gezielt dazu vorgesehen ist, einen Eintritt und/oder einen Austritt eines Fluidstroms in ein Bauteil hinein und/oder aus einem Bauteil heraus zu vermeiden und/oder auf ein Minimum zu begrenzen. Besonders bevorzugt ist das erste Fluidrückhalteelement dazu vorgesehen, einen Fluidstrom zu vermeiden oder zu begrenzen, der durch die Scheibenwischerverbindungseinheit hindurchströmt und an einer einer Wischblatthauptanströmungsseite abgewandten Seite des Wischblatts, insbesondere der Spoilereinheit des Wischblatts, austritt.

Erfindungsgemäß ist das erste Fluidrückhalteelement ausgehend vom Spoileraufnahmebereich, von einer Deckseite des Grundkörpers betrachtet, bogenförmig ausgebildet. Unter einer "Deckseite" soll hier insbesondere eine Seite des Grundkörpers verstanden werden, die in einem montierten Zustand der Scheibenwischerverbindungseinheit dem Wischblatt abgewandt ist und in einer Erstreckung zumindest durch die Wischarmseite und/oder die zwei zumindest im Wesentlichen parallel zur Längsrichtung des Grundkörpers verlaufenden und sich gegenüberliegenden Seitenwänden begrenzt ist. Unter dem Begriff "bogenförmig" soll insbesondere eine geometrische Form verstanden werden, die in einer Ebene betrachtet als Kreisbogen ausgebildet ist oder zumindest einen Radius entlang einer Gesamterstreckung aufweist. Es ist jedoch auch denkbar, dass das erste Fluidrückhalteelement eine andere, einem Fachmann als sinnvoll erscheinende Form aufweist. Mittels der erfindungsgemäßen Ausgestaltung der Scheibenwischerverbindungseinheit kann besonders vorteilhaft einem Austreten des Fluidstroms auf einer der Wischblatthauptanströmungsseite abgewandten Seite der Scheibenwischerverbindungseinheit entgegengewirkt werden.

Ferner wird vorgeschlagen, dass der Grundkörper ein sich an das erste Fluidrückhaltelement anschließendes zweites Fluidrückhalteelement aufweist, das auf einer einer Deckseite des Grundkörpers abgewandten Seite angeordnet ist und sich mit zumindest einer senkrecht zu einer Seitenwand erstreckenden Komponente in einen Innenbereich des Grundkörpers erstreckt. Besonders bevorzugt ist das erste Fluidrückhalteelement zumindest teilweise einstückig mit dem zweiten Fluidrückhalteelement ausgebildet. Unter einem "Innenbereich" soll hier insbesondere ein Bereich, insbesondere ein Raum, verstanden werden, der zumindest von der Wischarmseite, von der Deckseite und von den zwei zumindest im Wesentlichen parallel zur Längsrichtung des Grundkörpers verlaufenden und sich gegenüberliegenden Seitenwänden umgeben ist. Unter einer "Komponente des zweiten Fluidrückhalteelements" soll hier insbesondere eine vektorielle Komponente, insbesondere ein Ortsvektor, verstanden werden, die zur Definition des zweiten Fluidrückhalteelements in einem zweidimensionalen kartesischen Koordinatensystem vorgesehen ist, wie beispielsweise zur Definition einer Erstreckung des zweiten Fluidrückhalteelements. Es kann konstruktiv einfach eine kompakte Scheibenwischerverbindungseinheit erreicht werden, mittels der ein sinnvoller Schutz gegen ein "Wasserüberspritzen" erreicht werden kann.

Vorteilhafterweise weist der Grundkörper eine Lageraufnahme auf, die zur Aufnahme eines Lagerelements zur schwenkbaren Lagerung des Grundkörpers relativ zum Wischblattadapter vorgesehen ist. Hierdurch kann vorteilhaft eine Schwenkbewegung zwischen dem Grundkörper und dem Wischgummi, insbesondere dem montierten Wischblattadapter, realisiert werden, so dass beispielsweise der Wischgummi bei einem Wischblattwechsel relativ zum Grundkörper geschwenkt werden kann.

Ferner geht die Erfindung aus von einem Wischblatt mit zumindest einer Spoilereinheit, mit einem Wischblattadapter, der zumindest teilweise in einer Ausnehmung der Spoilereinheit, angeordnet ist, und mit einer Scheibenwischerverbindungseinheit.

Es wird vorgeschlagen, dass die Scheibenwischerverbindungseinheit die Spoilereinheit auf einer einer Wischblatthauptanströmungsseite abgewandten Seite zumindest auf einer Wischarmseite überlappt. Der Begriff "überlappen" soll hier insbesondere definieren, dass die Schiebenwischerverbindungseinheit, insbesondere der Grundkörper, im montierten Zustand die Spoilereinheit, betrachtet von der der Wischblatthauptanströmungsseite abgewandten Seite des Wischblatts, zumindest auf der Wischarmseite des Grundkörpers in einer Ebene senkrecht zur Längsrichtung des Grundkörpers überdeckt. Eine entlang einer Längsrichtung des Wischblatts verlaufende Erstreckung der Ausnehmung ist vorzugsweise kleiner als eine entlang der Längsrichtung des Wischblatts verlaufende Erstreckung des Grundkörpers. Mittels der erfindungsgemäßen Ausgestaltung kann vorteilhaft ein Fluidstrom zwischen der der Wischblatthauptanströmungsseite zugewandten Seite des Wischblatts, insbesondere die Spoilereinheit, und der der Wischblatthauptanströmungsseite abgewandten Seite des Wischblatts, insbesondere der Spoilereinheit, durch die Scheibenwischerverbindungseinheit weitestgehend verhindert werden.

Des Weiteren wird vorgeschlagen, dass zumindest das erste Fluidrückhalteelement und das zweite Fluidrückhalteelement des Grundkörpers der Scheibenwischerverbindungseinheit zumindest teilweise dichtend an der der Wischblatthauptanströmungsseite abgewandten Seite der Spoilereinheit anliegen. Unter "dichtend anliegen" soll hier insbesondere ein Anliegen des ersten Fluidrückhalteelements und des zweiten Fluidrückhalteelements an der der Wischblatthauptanströmungsseite abgewandten Seite der Spoilereinheit verstanden werden, wobei ein, insbesondere toleranzbedingter, Abstand zwischen dem ersten Fluidrückhalteelement bzw. dem zweiten Fluidrückhalteelement und der Spoilereinheit kleiner als 2 mm, bevorzugt kleiner als 1 mm und besonders bevorzugt kleiner als 0,05 mm ist. Vorteilhafterweise wird die Spoilereinheit mittels eines auf die Spoilereinheit auftreffenden Luftstroms, wie beispielsweise einem Fahrtwind, während einem Betrieb in Richtung des ersten Fluidrückhalteelements und des zweiten Fluidrückhalteelements gedrückt, so dass die Spoilereinheit zumindest in einem Betrieb direkt an dem ersten Fluidrückhalteelement und dem zweiten Fluidrückhalteelement anliegt. Es kann vorteilhaft ein Wasseraustritt zwischen der Spoilereinheit und dem ersten Fluidrückhalteelement bzw. dem zweiten Fluidrückhalteelement zumindest im Wesentlichen vermieden werden.

Vorteilhafterweise weist der Grundkörper ein Fluidrückhalteelement auf, das, betrachtet von einer Deckseite eines Grundkörpers der Scheibenwischerverbindungseinheit, einen Winkel ungleich 90° zu einer Seitenwand des Grundkörpers einschließt. Besonders bevorzugt schließen die der Wischblatthauptanströmungsseite zugewandte Seitenwand des Grundkörpers und das Fluidrückhalteelement einen spitzen Winkel ein. Es ist jedoch auch denkbar, dass die Seitenwand des Grundkörpers und das Fluidrückhalteelement einen von einem spitzen Winkel abweichenden Winkel einschließen. Mittels der erfindungsgemäßen Ausgestaltung kann einem Eintritt eines Fluidstroms in den Innenbereich des Grundkörpers entlang der Längsrichtung des Grundkörpers vorteilhaft entgegengewirkt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht auf eine einer Wischblatthauptanströmungsseite zugewandte Seite eines erfindungsgemäßen Wischblatts mit einer erfindungsgemäßen Scheibenwischerverbindungseinheit in einer schematischen Darstellung,
- Fig. 2: eine perspektivische Ansicht auf die der Wischblatthauptanströmungsseite abgewandte Seite eines Ausschnitts des erfindungsgemäßen Wischblatts mit der an ein Anschlusselement eines Wischarms gekoppelten erfindungsgemäßen Scheibenwischerverbindungseinheit,
- Fig. 3: eine Ansicht auf die der Wischblatthauptanströmungsseite abgewandte Seite eines Ausschnitts des erfindungsgemäßen Wischblatts mit der erfindungsgemäßen Scheibenwischerverbindungseinheit in einer schematischen Darstellung,
- Fig. 4: eine Ansicht des erfindungsgemäßen Wischblatts auf eine Wischarmseite der erfindungsgemäßen Scheibenwischerverbindungseinheit in einer schematischen Darstellung,
- Fig. 5: eine perspektivische Detailansicht der erfindungsgemäßen Scheibenwischerverbindungseinheit in einer schematischen Darstellung und
- Fig. 6: eine Ansicht der erfindungsgemäßen Scheibenwischerverbindungseinheit von einer in einem montierten Zustand dem Wischblatt zugewandten Seite der Scheibenwischerverbindungseinheit in einer schematischen Darstellung.

### Beschreibung des Ausführungsbeispiels

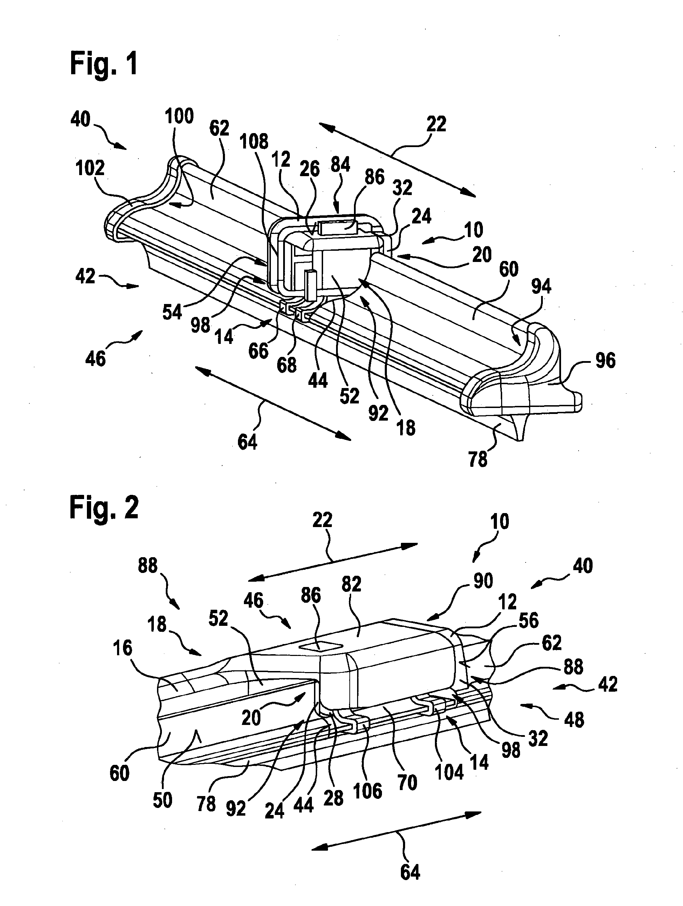

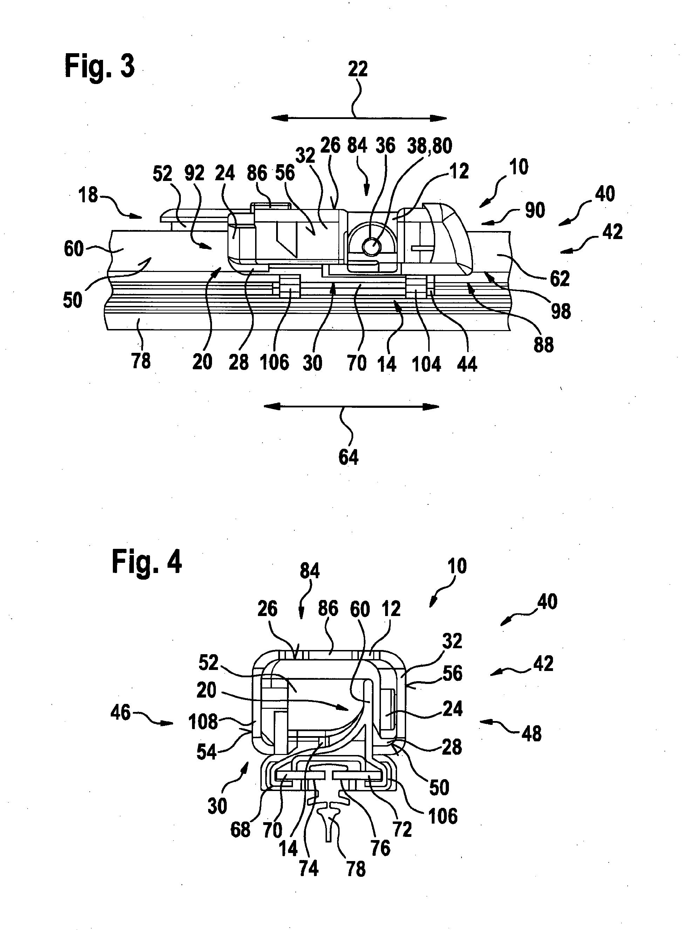

Figur 1 zeigt ein Wischblatt 40 für einen Scheibenwischer, das eine Spoilereinheit 42, einen Wischblattadapter 14, der in einer Ausnehmung 44 der Spoilereinheit 42 angeordnet ist, und eine Scheibenwischerverbindungseinheit 10 aufweist. Die Spoilereinheit 42 umfasst ein erstes Spoilerelement 60 und ein zweites Spoilerelement 62, die entlang einer Längsrichtung 64 des Wischblatts 40 beabstandet voneinander angeordnet sind. Eine Erstreckung der Ausnehmung 44 entlang der Längsrichtung 64 des Wischblatts 40 wird durch einen Abstand des ersten Spoilerelements 60 relativ zum zweiten Spoilerelement 62 gebildet. Der Wischblattadapter 14 ist mittels hakenförmiger Befestigungselemente 66, 68, 104, 106 mit Federschienen 70, 72 des Wischblatts 40 verbunden. Es ist jedoch auch denkbar, dass der Wischblattadapter 14 mittels einer anderen, einem Fachmann bekannten Verbindungsart, wie beispielsweise mittels einer Schweißverbindung, mit den Federschienen 70, 72 verbunden ist. Die Federschienen 70, 72 sind in Nuten 74, 76 eines Wischgummis 78 des Wischblatts 40 angeordnet (Figur 4). Mittels der hakenförmigen Befestigungselemente 66, 68, 104, 106 des Wischblattadapters 14 werden die Federschienen 70, 72 in den Nuten 74, 76 gehalten. Somit ist der Wischblattadapter 14 durch die Verbindung der hakenförmigen Befestigungselemente 66, 68, 104, 106 und den Federschienen 70, 72 an dem Wischgummi 78 des Wischblatts 40 befestigt.

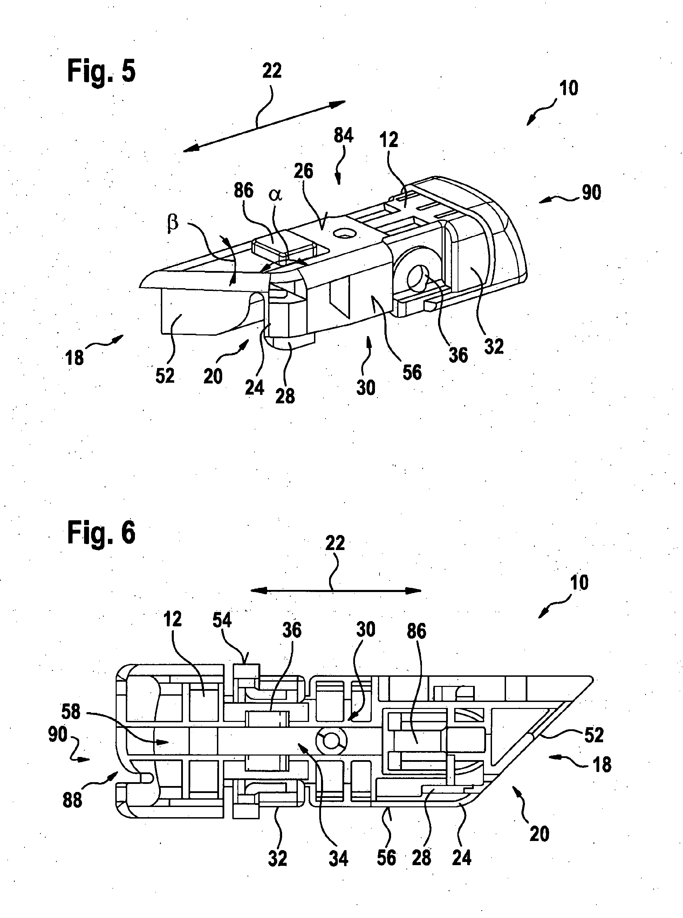

Die Scheibenwischerverbindungseinheit 10 weist einen Grundkörper 12 zur Verbindung des Wischblattadapters 14 mit einem Wischarm 16 des Scheibenwischers auf. Der Grundkörper 12 der Scheibenwischerverbindungseinheit 10 weist einen Aufnahmebereich 58 für den Wischblattadapter 14 auf (Figur 6). Der Wischblattadapter 14 ist in einem montierten Zustand des Grundkörpers 12 in einem Innenbereich 34 des Grundkörpers 12 der Scheibenwischerverbindungseinheit 10 angeordnet.

Des Weiteren weist der Grundkörper 12 einen auf einer Wischarmseite 18 angeordneten Spoileraufnahmebereich 20 auf. Das erste Spoilerelement 60 der Spoilereinheit 42 erstreckt sich in einem montierten Zustand der Scheibenwischerverbindungseinheit 10 mit einem ersten Ende 92 entlang der Längsrichtung 64 des Wischblatts 40 in den Spoileraufnahmebereich 20 hinein. Hierbei ist das erste Ende 92 des ersten Spoilerelements 60 in einer senkrecht zur Längsrichtung 64 des Wischblatts 40 verlaufenden Ebene von drei Seiten des Grundkörpers 12 umgeben. An einem dem in den Spoileraufnahmebereich 20 hinein erstreckenden Ende 92 abgewandten Ende 94 des ersten Spoilerelements 60 ist eine Endkappe 96 angeordnet. Ferner weist der Grundkörper 12 einen weiteren Spoileraufnahmebereich 88 auf, der auf einer der Wischarmseite 18 gegenüberliegenden Seite 90 des Grundkörpers 12 angeordnet ist (Figur 3). Das zweite Spoilerelement 62 der Spoilereinheit 42 erstreckt sich hierbei in einem montierten Zustand der Scheibenwischerverbindungseinheit 10 mit einem ersten Ende 98 entlang der Längsache 64 des Wischblatts 40 in den weiteren Spoileraufnahmebereich 88 hinein. Hierbei ist das erste Ende 98 des zweiten Spoilerelements 62 in einer senkrecht zur Längsrichtung 64 des Wischblatts 40 verlaufenden Ebene von drei Seiten des Grundkörpers 12 umgeben. An einem dem in den weiteren Spoileraufnahmebereich 88 hinein erstreckenden Ende 98 abgewandten Ende 100 des zweiten Spoilerelements 62 ist eine weitere Endkappe 102 angeordnet.

Der Grundkörper 12 weist ferner eine Lageraufnahme 36 auf, die zur Aufnahme eines Lagerelements 38 zur schwenkbaren Lagerung des Grundkörpers 12 relativ zum Wischblattadapter 14 vorgesehen ist. Das Lagerelement 38 ist als Bolzen 80 ausgebildet. Der Bolzen 80 verbindet den Grundkörper 12 schwenkbar mit dem Wischblattadapter 14, so dass eine Schwenkbewegung zwischen dem Grundkörper 12 und dem Wischblattadapter 14 ermöglicht werden kann (Figur 3).

Figur 2 zeigt eine einer Wischblatthauptanströmungsseite 46 abgewandte Seite 48 des Wischblatts 40 mit der an ein Anschlusselement 82 des Wischarms 16 gekoppelten Scheibenwischerverbindungseinheit 10. Das Anschlusselement 82 wird zu einer Ankopplung an den Grundkörper 12 entlang einer Längsrichtung 22 des Grundkörpers 12 auf einen Koppelbereich 84 des Grundkörpers 12 aufgeschoben. Der Koppelbereich 84 weist ein Formschlusselement 86 auf, das zur formschlüssigen Verbindung mit dem Anschlusselement 82 lösbar in eine Ausnehmung des Anschlusselements 82 einrastet. Das Formschlusselement 86 ist elastisch beweglich an eine Deckseite 26 des Grundkörpers 12 angeformt (Figur 5). Eine Ankopplung und eine Entkopplung des Anschlusselements 82 und der Scheibenwischerverbindungseinheit 10 erfolgt auf eine, für den Fachmann bekannte Art und Weise, so dass hier nicht näher darauf eingegangen wird.

Figur 3 zeigt das Wischblatt 40 mit der Scheibenwischerverbindungseinheit 10 von der der Wischblatthauptanströmungsseite 46 abgewandten Seite 48 des Wischblatts 40. Der Grundkörper 12 der Scheibenwischerverbindungseinheit 10 überlappt die Spoilereinheit 42 auf der der Wischblatthauptanströmungsseite 46 abgewandten Seite 48 auf der Wischarmseite 18 des Grundkörpers 12. Der Grundkörper 12 weist hierbei ein quer zur Längsrichtung 22 des Grundkörpers 12, an den Spoileraufnahmebereich 20 angrenzendes erstes Fluidrückhalteelement 24 auf. Das erste Fluidrückhalteelement 24 ist ausgehend vom Spoileraufnahmebereich 20, von der Deckseite 26 des Grundkörpers 12 betrachtet, bogenförmig ausgebildet. Das erste Fluidrückhalteelement 24 erstreckt sich ausgehend von dem Spoileraufnahmebereich 20 in eine Seitenwand 32 des Grundkörpers 12. Die Seitenwand 32 ist einstückig mit dem ersten Fluidrückhalteelement 24 ausgebildet. Somit bildet das erste Fluidrückhalteelement 24 einen Übergang von der Wischarmseite 18 in eine der Wischblatthauptanströmungsseite 46 abgewandte Seite 56 des Grundkörpers 12. Ferner bildet das erste Fluidrückhalteelement 24 einen Übergang von dem Spoileraufnahmebereich 20 in die Seitenwand 32 des Grundkörpers 12. Das erste Fluidrückhalteelement 24 überlappt die Spoilereinheit 42 entlang der Längsrichtung 64 des Wischblatts 40 an der Wischarmseite 18 des Grundkörpers 12. Mittels der Überlappung der Spoilereinheit 42 an der der Wischblatthauptanströmungsseite 46 abgewandten Seite 48 des Wischblatts 40 an der Wischarmseite 18 des Grundkörpers 12 durch das erste Fluidrückhalteelement 24 kann ein Fluidstrom, wie beispielsweis ein Wasserfluss, von der Wischblatthauptanströmungsseite 46 zu der der Wischblatthauptanströmungsseite 46 abgewandten Seite 48 des Wischblatts 40 im Wesentlichen vermieden werden.

Des Weiteren weist der Grundkörper 12 ein sich an das erste Fluidrückhalteelement 24 anschließendes zweites Fluidrückhalteelement 28 auf, das auf einer der Deckseite 28 des Grundkörpers 12 abgewandten Seite 30 angeordnet ist und sich mit einer senkrecht zu der Seitenwand 32 erstreckenden Komponente in den Innenbereich 34 des Grundkörpers 12 erstreckt (Figuren 4 und 6). Mittels der Erstreckung des zweiten Fluidrückhalteelements 28 in den Innenbereich 34 des Grundkörpers 12 wird ein Zwischenraum zwischen einer der Wischblatthauptanströmungsseite 46 abgewandten Seite 50 der Spoilereinheit 42 und der Scheibenwischerverbindungseinheit 10 geschlossen, so dass ein Fluidstrom, wie beispielsweise ein Wasserfluss, von der Wischblatthauptanströmungsseite 46 zu der der Wischblatthauptanströmungsseite 46 abgewandten Seite 48 des Wischblatts 40 durch die Scheibenwischerverbindungseinheit 10 im Wesentlichen vermieden werden kann. Das erste Fluidrückhalteelement 24 ist einstückig mit dem zweiten Fluidrückhalteelement 28 ausgebildet. Das erste Fluidrückhalteelement 24 und das zweite Fluidrückhalteelement 28 überlappen die Spoilereinheit 42 jeweils an der Wischarmseite 18.

Figur 4 zeigt eine Ansicht auf die Wischarmseite 18 der Scheibenwischerverbindungseinheit 10, wobei die Endkappe 96 von dem dem in den Spoileraufnahmebereich 20 hinein erstreckenden Ende 92 abgewandten Ende 94 des ersten Spoilerelements 60 abgenommen ist. Das erste Fluidrückhalteelement 24 und das zweite Fluidrückhalteelement 28 liegen dichtend an der der Wischblatthauptanströmungsseite 46 abgewandten Seite 50 der Spoilereinheit 42 an. Mittels einer Anströmung der Spoilereinheit 42 von einem Fluidstrom, wie beispielsweise einem Fahrtwind, wird die der Wischblatthauptanströmungsseite 46 abgewandte Seite 50 der Spoilereinheit 42 in eine Richtung quer zur Längsrichtung 64 des Wischblatts 40 gegen das erste Fluidrückhalteelement 24 und das zweite Fluidrückhalteelement 28 gedrückt. Ein Andrücken der der Wischblatthauptanströmungsseite 46 abgewandten Seite 50 der Spoilereinheit 42 bewirkt eine Dichtwirkung zwischen der der Wischblatthauptanströmungsseite 46 abgewandten Seite 50 der Spoilereinheit 42 und dem ersten Fluidrückhalteelement 24 und dem zweiten Fluidrückhalteelement 28. Das erste Fluidrückhalteelement 24 und das zweite Fluidrückhalteelement 28 überdecken die Spoilereinheit 42, betrachtet von der der Wischblatthauptanströmungsseite 46 abgewandten Seite 48 des Wischblatts 40, auf der Wischarmseite 18 des Grundkörpers 12 in einer Ebene senkrecht zur Längsrichtung 22 des Grundkörpers 12. Der Grundkörper 12 überdeckt die Spoilereinheit 42, betrachtet von der der Wischblatthauptanströmungsseite 46 abgewandten Seite 48 des Wischblatts 40, ferner an der der Wischarmseite 18 gegenüberliegenden Seite 90 des Grundkörpers 12. Eine Erstreckung des Grundkörpers 12 entlang der Längsrichtung 22 des Grundkörpers 12 ist größer als eine Erstreckung der Ausnehmung 44 entlang der Längsrichtung 64 des Wischblatts 40. Somit überdeckt der Grundkörper 12 die Spoilereinheit 42 auf der der Wischblatthauptanströmungsseite 46 abgewandten Seite 48 des Wischblatts 40 auf der Wischarmseite 18 und auf der der Wischblatthauptanströmungsseite 46 abgewandten Seite 48 des Wischblatts 40 auf der der Wischarmseite 18 gegenüberliegenden Seite 90 des Grundkörpers 12.

Der Grundkörper 12 weist ferner ein drittes Fluidrückhalteelement 52 auf, das, betrachtet von der Deckseite 26 des Grundkörpers 12, einen Winkel α ungleich 90° zu der Seitenwand 32 des Grundkörpers 12 einschließt. Das dritte Fluidrückhalteelement 52 und die Seitenwand 32 des Grundkörpers 12 schließen den Winkel α von ungefähr 135° ein. Eine auf der der Wischblatthauptanströmungsseite 46 zugewandten Seite 54 des Grundkörpers 12 angeordnete Seitenwand 108 des Grundkörpers 12 schließt mit dem dritten Fluidrückhalteelement 52 einen Winkel β von ungefähr 45° ein. Die auf der der Wischblatthauptanströmungsseite 46 zugewandten Seite 54 angeordnete Seitenwand 108 des Grundkörpers 12 weist eine größere Erstreckung entlang der Längsrichtung 22 des Grundkörpers 12 auf als die auf der der Wischblatthauptanströmungsseite 46 abgewandten Seite 54 des Grundkörpers 12 angeordnete Seitenwand 32 des Grundkörpers 12.

Mittels des dritten Fluidrückhalteelements 52 wird ein Eindringen eines Fluidstroms, wie beispielsweise eines Wasserflusses, entlang der Längsrichtung 64 des Wischblatts 40 in den Grundkörper 12 begrenzt. Ein Zusammenwirken des ersten Fluidrückhalteelements 24, des zweiten Fluidrückhalteelements 28 und des dritten Fluidrückhalteelements 52 bewirkt eine Unterbrechung eines Fluidstroms, wie beispielsweise eines Wasserflusses, entlang der Längsrichtung 64 des Wischblatts 40, so dass ein Wasseraustritt auf der der Wischblatthauptanströmungsseite 46 abgewandten Seite 48 des Wischblatts 40 im Wesentlichen verhindert werden kann.

## Patentansprüche

1. Scheibenwischerverbindungseinheit mit einem Grundkörper (12) zur Verbindung eines Wischblattadapters (14), wobei der Wischblattadapter (14) ein Bauteil eines Scheibenwischers bildet und dazu vorgesehen ist, Federschienen zur Vorspannung eines Wischgummis des Scheibenwischers mit dem Wischgummi zu verbinden, und mit einem Wischarm (16) des Scheibenwischers, wobei der Grundkörper (12) einen auf einer Wischarmseite (18) angeordneten Spoileraufnahmebereich (20) aufweist, wobei ein Randbereich des Spoileraufnahmebereichs (20), in einer Ebene senkrecht zu einer Längsrichtung (22) des Grundkörpers (12) betrachtet, zumindest teilweise gekrümmt ausgebildet ist, **dadurch gekennzeichnet, dass** der Grundkörper (12) ein zumindest teilweise quer zu der Längsrichtung (22) des Grundkörpers (12), an den Spoileraufnahmebereich (20) angrenzendes erstes Fluidrückhalteelement (24) aufweist, wobei das erste Fluidrückhalteelement (24) ausgehend vom Spoileraufnahmebereich (20), von einer Deckseite (26) des Grundkörpers (12) betrachtet, bogenförmig ausgebildet ist.

2. Scheibenwischerverbindungseinheit nach Anspruch 1, **dadurch gekennzeichnet, dass** der Randbereich des Spoileraufnahmebereichs (20), in der Ebene senkrecht zu der Längsrichtung (22) des Grundkörpers (12) betrachtet, zumindest im Wesentlichen S-förmig ausgebildet ist.

3. Scheibenwischerverbindungseinheit nach Anspruch 1 oder 2, **dadurch gekennzeichnet dass** der Grundkörper (12) ein sich an das erste Fluidrückhalteelement (24) anschließendes zweites Fluidrückhalteelement (28) aufweist, das auf einer einer Deckseite (26) des Grundkörpers (12) abgewandten Seite (30) angeordnet ist und sich mit zumindest einer senkrecht zu einer Seitenwand (32) erstreckenden Komponente in einen Innenbereich (34) des Grundkörpers (12) erstreckt.

4. Scheibenwischerverbindungseinheit nach Anspruch 3, **dadurch gekennzeichnet, dass** das erste Fluidrückhalteelement (24) zumindest teilweise einstückig mit dem zweiten Fluidrückhalteelement (28) ausgebildet ist.

5. Scheibenwischerverbindungseinheit nach einem der vorhergehenden Ansprüche, **dadurch gekennzeichnet, dass** der Grundkörper (12) eine Lageraufnahme (36) aufweist, die zur Aufnahme eines Lagerelements (38) zur schwenkbaren Lagerung des Grundkörpers (12) relativ zum Wischblattadapter (14) vorgesehen ist.

6. Wischblatt mit zumindest einer Spoilereinheit (42), mit einem Wischblattadapter (14), der zumindest teilweise in einer Ausnehmung (44) der Spoilereinheit (42) angeordnet ist, und mit einer Scheibenwischerverbindungseinheit (10) nach einem der vorhergehenden Ansprüche, **dadurch gekennzeichnet, dass** die Scheibenwischerverbindungseinheit (10) die Spoilereinheit (42), in einem Betriebszustand betrachtet, auf einer einer Wischblatthauptanströmungsseite (46) abgewandten Seite (48) zumindest auf einer Wischarmseite (18) überlappt.

7. Wischblatt nach Anspruch 6, **dadurch gekennzeichnet, dass** zumindest ein erstes Fluidrückhalteelemente (24) und ein zweites Fluidrückhalteelement (28) eines Grundkörpers (12) der Scheibenwischerverbidnungseinheit (10) zumindest teilweise die Spoilereinheit (42) an der Wischarmseite (18) überlappen.

8. Wischblatt nach Anspruch 6 oder 7, **dadurch gekennzeichnet, dass** zumindest ein erstes Fluidrückhalteelement (24) und ein zweites Fluidrückhalteelement (28) eines Grundkörpers (12) der Scheibenwischerverbindungseinheit (10) zumindest teilweise dichtend an der der Wischblatthauptanströmungsseite (46) abgewandten Seite (50) der Spoilereinheit (42) anliegen.

9. Wischblatt nach einem der Ansprüche 6 bis 8, **dadurch gekennzeichnet, dass** der Grundkörper (12) ein Fluidrückhalteelement (52) aufweist, das, betrachtet von einer Deckseite (26) eines Grundkörpers (12) der Scheibenwischerverbindungseinheit (10), einen Winkel (α) ungleich 90° zu einer Seitenwand (32) des Grundkörpers (12) einschließt.

## Claims

1. Wiper connecting unit with a basic body (12) for connecting a wiper blade adapter (14) wherein the wiper blade adapter (14) forms a component of a wiper and is provided for connecting spring rails for prestressing a wiper blade rubber of the wiper to the wiper blade rubber, and with a wiper arm (16) of the wiper, wherein the basic body (12) has a spoiler receiving region (20) arranged on one wiper arm side (18), wherein an edge region of the spoiler receiving region (20) is of at least partially curved design, as viewed in a plane perpendicular to a longitudinal direction (22) of the basic body (12), **characterized in that** the basic body (12) has a first fluid-retaining element (24) which is at least partially adjacent to the spoiler receiving region (20) transversely with respect to the longitudinal direction (22) of the basic body (12), wherein the first fluid-retaining element (24) is of curved design starting from the spoiler receiving region (20), as viewed from a top side (26) of the basic body (12).

2. Wiper connecting unit according to Claim 1, **characterized in that** the edge region of the spoiler receiving region (20), as viewed in the plane perpendicular to the longitudinal direction (22) of the basic body (12), is of at least substantially S-shaped design.

3. Wiper connecting unit at least according to Claim 1 or 2, **characterized in that** the basic body (12) has a second fluid-retaining element (28) which adjoins the first fluid-retaining element (24), is arranged on a side (30) facing away from a top side (26) of the basic body (12) and extends with at least one component, which extends perpendicularly to a side wall (32), into an inner region (34) of the basic body (12).

4. Wiper connecting unit according to Claim 3, **characterized in that** the first fluid-retaining element (24) is at least partially formed integrally with the second fluid-retaining element (28).

5. Wiper connecting unit according to one of the preceding claims, **characterized in that** the basic body (12) has a bearing receptacle (36) which is provided for receiving a bearing element (38) for the pivotable mounting of the basic body (12) relative to the wiper blade adapter (14).

6. Wiper blade with at least one spoiler unit (42), with a wiper blade adapter (14) which is at least partially arranged in a recess (44) of the spoiler unit (42), and with a wiper connecting unit (10) according to one of the preceding claims, **characterized in that** the wiper connecting unit (10) overlaps a side (48) of the spoiler unit (42) that faces away from a wiper blade main approach flow side (46), as viewed in an operating state, at least on one wiper arm side (18).

7. Wiper blade according to Claim 6, **characterized in that** at least one first fluid-retaining element (24) and one second fluid-retaining element (28) of a basic body (12) of the wiper connecting unit (10) at least partially overlap the spoiler unit (42) on the wiper arm side (18).

8. Wiper blade according to Claim 6 or 7, **characterized in that** at least one first fluid-retaining element (24) and one second fluid-retaining element (28) of a basic body (12) of the wiper connecting unit (10) bear in an at least partially sealing manner against that side (50) of the spoiler unit (42) which faces away from the wiper blade main approach flow side (46).

9. Wiper blade according to one of Claims 6 to 8, **characterized in that** the basic body (12) has a fluid-retaining element (52) which, as viewed from a top side (26) of a basic body (12) of the wiper connecting unit (10), encloses an angle (α) not equal to 90 ° to a side wall (32) of the basic body (12).

## Revendications

1. Unité de raccordement d'essuie-glace comprenant un corps de base (12) pour le raccordement d'un adaptateur (14) de balai d'essuie-glace, l'adaptateur (14) de balai d'essuie-glace formant un composant d'un essuie-glace et étant prévu pour raccorder des rails élastiques pour la précontrainte d'une lame en caoutchouc de l'essuie-glace à la lame en caoutchouc, et comprenant un bras d'essuie-glace (16) de l'essuie-glace, le corps de base (12) comprenant une région de réception de déflecteur (20) disposée sur un côté du bras d'essuie-glace (18), une région de bord de la région de réception de déflecteur (20) étant, considérée dans un plan perpendiculaire à une direction longitudinale (22) du corps de base (12), réalisée au moins partiellement de manière courbée, **caractérisée en ce que** le corps de base (12) comprend un premier élément de retenue de fluide (24) adjacent à la région de réception de déflecteur (20), au moins partiellement transversalement à la direction longitudinale (22) du corps de base (12), le premier élément de retenue de fluide (24) étant, considéré depuis un côté supérieur (26) du corps de base (12), réalisé sous forme arquée à partir de la région de réception de déflecteur (20).

2. Unité de raccordement d'essuie-glace selon la revendication 1, **caractérisée en ce que** la région de bord de la région de réception de déflecteur (20) est, considérée dans le plan perpendiculaire à la direction longitudinale (22) du corps de base (12), réalisée au moins essentiellement en forme de S.

3. Unité de raccordement d'essuie-glace selon la revendication 1 ou 2, **caractérisée en ce que** le corps de base (12) comprend un deuxième élément de retenue de fluide (28) se raccordant au premier élément de retenue de fluide (24), lequel deuxième élément de retenue de fluide est disposé sur un côté (30) opposé au côté supérieur (26) du corps de base (12) et s'étend, par au moins un composant s'étendant perpendiculairement à une paroi latérale (32), dans une région intérieure (34) du corps de base (12).

4. Unité de raccordement d'essuie-glace selon la revendication 3, **caractérisée en ce que** le premier élément de retenue de fluide (24) est réalisé au moins partiellement d'une seule pièce avec le deuxième élément de retenue de fluide (28).

5. Unité de raccordement d'essuie-glace selon l'une quelconque des revendications précédentes, **caractérisée en ce que** le corps de base (12) comprend un logement de palier (36) qui est prévu pour la réception d'un élément de palier (38) en vue du montage pivotant du corps de base (12) par rapport à l'adaptateur (14) de balai d'essuie-glace.

6. Balai d'essuie-glace comprenant au moins une unité de déflecteur (42), comprenant un adaptateur (14) de balai d'essuie-glace qui est disposé au moins partiellement dans un évidement (44) de l'unité de déflecteur (42), et comprenant une unité de raccordement d'essuie-glace (10) selon l'une quelconque des revendications précédentes, **caractérisé en ce que**, considérée dans un état de fonctionnement, l'unité de raccordement d'essuie-glace (10) chevauche l'unité de déflecteur (42) sur un côté (48) opposé à un côté d'écoulement principal du balai d'essuie-glace (46), au moins sur un côté du bras d'essuie-glace (18).

7. Balai d'essuie-glace selon la revendication 6, **caractérisé en ce qu'**au moins un premier élément de retenue de fluide (24) et un deuxième élément de retenue de fluide (28) d'un corps de base (12) de l'unité de raccordement d'essuie-glace (10) chevauchent au moins partiellement l'unité de déflecteur (42) sur le côté du bras d'essuie-glace (18).

8. Balai d'essuie-glace selon la revendication 6 ou 7, **caractérisé en ce qu'**au moins un premier élément de retenue de fluide (24) et un deuxième élément de retenue de fluide (28) d'un corps de base (12) de l'unité de raccordement d'essuie-glace (10) s'appliquent au moins partiellement de manière étanche contre le côté (50) de l'unité de déflecteur (42) opposé au côté d'écoulement principal du balai d'essuie-glace (46).

9. Balai d'essuie-glace selon l'une quelconque des revendications 6 à 8, **caractérisé en ce que** le corps de base (12) comprend un élément de retenue de fluide (52) qui, considéré à partir d'un côté supérieur (26) d'un corps de base (12) de l'unité de raccordement d'essuie-glace (10), forme un angle (α) différent de 90° par rapport à une paroi latérale (32) du corps de base (12).
